# EUROPÄISCHE PATENTANMELDUNG

(11) **EP 0 904 702 A2**
(43) Veröffentlichungstag der Anmeldung: **31.03.1999**
(21) Anmeldenummer: 98810893.2
(22) Anmeldetag: 08.09.1998
(51) Int. Cl.: A23L 2/08

(54) **Vorrichtung und Verfahren zum Konzentrieren von Obst- und Gemüsesäften**

(30) Priorität: 08.09.1997 CH 2095/97
(71) Anmelder: Vinopur AG, 4147 Aesch (CH)
(72) Erfinder: Nussbaumer-Schaub, Kurt, 4147 Aesch (CH); Kallenberg, Klaus, 4153 Reinach (CH); Lienhard, Roland, 4153 Reinach (CH)
(74) Vertreter: Braun, André

(57) **Zusammenfassung**

Obst- oder Gemüsesaft S wird mittels eines Vorfilters F1 vorgeklärt und mit Mitteln P2,P3 zur Erzeugung des notwendigen Filtrationsdruckes durch ein Gegenosmosefilter F2 gepresst. Damit sich an den im Gegenosmosefilter F2 vorhandenen Gegenosmose-Membranen keine Partikel ansammeln und den Filtrationsvorgang behindern oder verunmöglichen können, ist die Durchflussgeschwindigkeit des Saftes an den Gegenosmosemembranen so hoch zu wählen, dass der sogenannte Grenzschichteffekt überwunden wird. Zur Erhöhung der Durchflussgeschwindigkeit kann ein Teil des Filtrats mittels einer Pumpe P4 in den Einlassbereich des Gegenosmosefilters zurückgeleitet werden. Das Gegenosmosefilter ist so zu fertigen, dass es hohe Drücke aushält, die in der Regel höher als 50 bar sein sollten.

## Beschreibung

Die vorliegende Erfindung betrifft eine Vorrichtung gemäss Oberbegriff des Patentanspruches 1 sowie ein Verfahren gemäss Oberbegriff des Patentanspruches 13.

Bei Obst- und Gemüsesäften kann es aus verschiedenen Gründen vorteilhaft sein, deren Konzentration zu erhöhen. So ist beispielsweise bei erhöhter Konzentration die Haltbarkeit verbessert und das Transportgewicht bei gleichem Gehalt an Inhaltsstoffen erniedrigt. Bei Weinen ist für Gehalt und Aroma ein hoher Zuckergehalt erwünscht. In vielen Ländern ist eine Aufzuckerung mit künstlichem Zuckerzusatz, d.h. eine sogenannte Chaptalisation erlaubt, jedoch bei den Kunden nicht sehr geschätzt. Besser ist es, den vorgeklärten Traubenmost zu konzentrieren, was zudem noch den Vorteil hat, dass zugleich auch noch andere Mostinhaltstoffe wie Säuren, Aromen, Proteine etc., angereichert werden.

Eine Konzentrationserhöhung durch Abdampfen von Wasser hat neben einem extrem hohen Energieaufwand verschiedene andere Nachteile, wie Kosten der Anlage und kleine Leistung. Besser ist es, aus dem ungeklärten Most Wasser (Permeat) herauszufiltern, so dass der natürliche Zuckergehalt im Konzentrat (Retenat) erhöht wird.

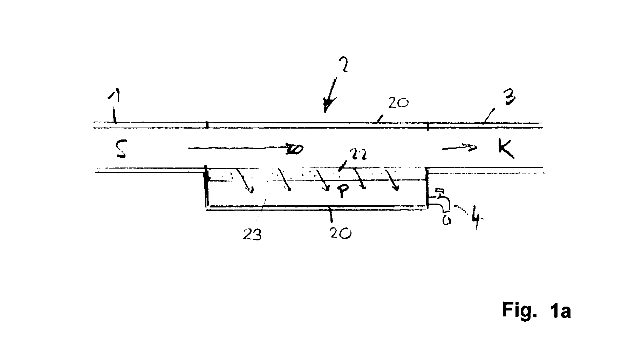

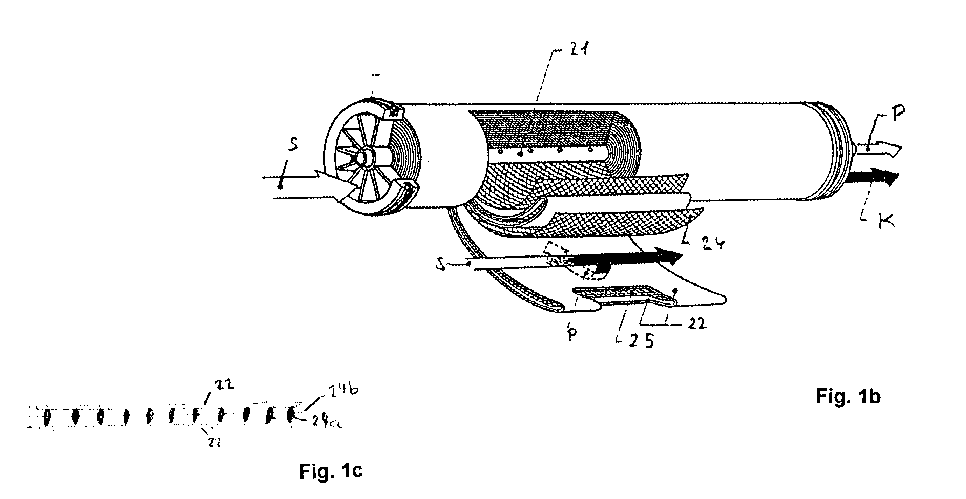

Als Filtermethode bietet sich hierfür in hervorragender Weise die Umkehrosmose an. In Figur 1a ist zum besseren Verständnis des technischen Hintergrundes eine schematische Darstellung des Filterprinzips gezeigt. Von einem Zuflussrohr 1 wird zu konzentrierender Saft S in ein Gegenosmose-filter 2 geleitet und gelangt von dort in ein Abflussrohr 3. Das Gegenosmosefilter besteht aus einem Gehäuse 20, welches unten einen Auffangraum 23 mit einem Ablassrohr 4 aufweist. Der Auffangraum 23 wird vom übrigen Raum des Filters durch eine Gegenosmose-Membran 22 abgetrennt. Wenn nun Saft S in das Gegenosmosefilter 2 geleitet wird, fliesst er an der Gegenosmose-Membran 22 vorbei. Bei einem Druck, der höher ist als der osmotische Druck der Flüssigkeit, wird Permeat, d.h. bei Obst- und Gemüsesäften Wasser, in den Auffangraum 23 abgepresst. Infolge des Wasserverlustes wird der Saft S beim Durchfluss durch das Gegenosmosefilter 2 eingedickt und als Konzentrat K in das Abflussrohr 3 abgeleitet. Um möglichst viel Permeat abpressen zu können, werden möglichst grossflächige Gegenosmose-Membranen eingesetzt. Nachteilig ist jedoch die erhebliche Länge solcher Gegenosmosefilter, welche bei bekannten Anlagen bis zu 30m betragen kann. Eine solche Anlage ist nicht transportabel und die Anschaffungskosten sind erheblich. Um die Gegenosmosefilter kleiner zu machen, wurden die Gegenosmosefilter so gestaltet, dass der Saft von den Gegenosmose-Membranen möglichst vollständig umschlossen wird. Um bei gleich grossen Oberflächen zusätzlichen Raum zu gewinnen, werden die Gegenosmose-Membranen gefaltet oder als sogenannte Wickelmodule gewickelt.

Wickelmodule herkömmlicher Art, welche beispielsweise zur Wasseraufbereitung eingesetzt werden, sind im Falle von Obst- und Gemüsesäften in kürzester Zeit verstopft und sind für Drücke über 70 bar nicht geeignet, so dass der Einsatz solcher Wickelmodule bisher verworfen wurde. Diese und die nachstehenden Druckangaben in bar betreffen im Vergleich zum athmosphärischen Druck immer den Überdruck.

Eine Analyse des Problems ergab, dass der sogenannte Grenzschichteffekt an den Gegenosmose-Membranoberflächen überwunden werden muss. Das Profil der Durchflussgeschwindigkeit zeigt nämlich im Zwischenraum zwischen den Gegenosmose-Membranen 22 einen parabelförmigen Verlauf, indem die Durchflussgeschwindigkeit im Mittenbereich zwischen den Gegenosmosemembranen 22 am höchsten ist und an den Randzonen gegen Null abnimmt, also ausgerechnet dort, wo der Filtrationsvorgang abläuft. Bei kleineren Durchflussgeschwindigkeiten sammeln sich gelöste und ungelöste Stoffe an den Randzonen an, bilden eine Schicht an der Gegenosmose-Membranoberfläche, verstopfen die Gegenosmose-Membranen, so dass der Filtrationsvorgang nach kürzester Zeit abbricht.

Es ist nun Aufgabe der Erfindung eine Vorrichtung zu schaffen, welche bei möglichst geringem Raumbedarf, mit möglichst einfachen Mitteln und möglichst geringem Aufwand auf dem Wege der Umkehrosmose eine Konzentration von Obst-und Gemüsesäften ermöglicht. Es ist ferner Aufgabe der Erfindung ein diesbezügliches Verfahren anzugeben.

Diese Aufgaben werden gemäss dem kennzeichnenden Teil der Patentansprüche 1 und 13 gelöst.

Erfindungsgemäss werden Mittel zur Erzeugung des notwendigen Filtrationsdruckes zur Verfügung gestellt, die über Verbindungselemente, durch welche der Saft geleitet wird, mit einem Gegenosmosefilter verbunden sind. Als Verbindungselemente kommen Rohre aus Metall, Kunststoff, Glas oder auch Schläuche in Betracht. Mittel zur Druckerzeugung sind vorzugsweise Pumpen, wobei Kolben- oder Turbinenpumpen u.a. eingesetzt werden können.

Nachstehend wird die Erfindung anhand von Zeichnungen beispielsweise näher erläutert. Es zeigen:
Fig. 1b eine teilweise explosionsartige Darstellung eines Wickelmoduls;
Fig. 1c eine Darstellung eines Parallelspacers im Querschnitt;
Fig. 2 eine einfachere Ausführungsform der Erfindung und
Fig. 3 eine weitere Ausführungsform der Erfindung.

Als Gegenosmosefilter wird vorteilhafterweise wenigstens ein Wickelmodul verwendet. In Figur 1b ist ein solches Wickelmodul dargestellt. Der Saft S fliesst zwischen Gegenosmose-Membranen 22, welche einen vorgegebenen Abstand einhalten müssen, damit der Saft S ungehindert durchfliessen kann. Zu diesem Zweck befinden sich zwischen den Gegenosmose-Membranen 22 Gewebe 24, welche als Abstandhalter, nachstehend "Spacer 24" genannt, dienen. Es hat sich gezeigt, dass insbesondere bei Traubenmost ein Abstand von 0,7 bis 3 mm, vorzugsweise 1 bis 2 mm, optimal ist. Ferner ist zwischen den Gegenosmose-Membranen 22 ein sogenannter Permeatspacer 25 vorgesehen, welcher dem ungehinderten Abfluss des Permeats dient. Die Gegenosmose-Membranen 22 sind zusammen mit Spacern 24 und Permeatspacer 25, um ein zentrales Sammelrohr 21 gewickelt, in welchem Permeat P gesammelt und abgeführt wird. Da sich rasch Partikelansammlungen bilden, welche sowohl den Durchfluss des Saftes als auch den Abfluss von Permeat behindern, eignen sich bevorzugt sogenannte Parallel-Spacer. Zum besseren Verständnis ist in Fig. 1c ein solcher Parallel-spacer im Querschnitt dargestellt. Der Durchfluss erfolgt senkrecht zur Zeichnungsebene. Man erkennt, dass die Gegenosmosemembrane 22 durch in Flussrichtung ausgerichtete stegartige Spacerelemente 24a in vorgegebenem Abstand auseinandergehalten werden, und dass die Spacerelemente mittels dünner Verbindungsstege 24b ihrerseits beabstandet und ausgerichtet werden.

Das in der Einleitung geschilderte Problem des Grenzschichteffektes konnte erfindungsgemäss dadurch überwunden werden, dass sowohl die Durchflussgeschwindigkeit, als auch der Druck gegenüber bekannten Einrichtungen deutlich erhöht wurden. Es zeigte sich, dass beispielsweise bei Traubenmost mit Durchflussgeschwindigkeiten grösser als 0,1 m/s, vorzugsweise von 0,6 -0,8 m/s, und mit Drücken von über 50 bar, vorzugsweise 80-120 bar, gearbeitet werden sollte. Der Druck des durch das Gegenosmosefilter geführten Saftes wird mittels wenigstens einer motorgetriebenen Pumpe aufgebaut. Als Motor eignet sich beispielsweise ein Drehstrommotor.

In einer bevorzugten Ausführungsform werden zweistufige Pumpenaggregate eingesetzt, indem zur Druckerhöhung eine zweite Pumpe vorgesehen ist, welche von einer Turbine angetrieben wird, welche dem Druckabbau des aus dem Gegenosmosefilter abfliessenden Konzentrats dient. Damit wird die beim Druckabbau erzeugte Energie nicht in zumeist unerwünschte Wärme, sondern in nutzbringende mechanische Energie umgewandelt.

In einer weiteren bevorzugten Ausführungsform wird ein grosser Teil des aus dem Gegenosmosefilter abfliessenden Konzentrats mittels einer Pumpe wieder in den Einlassbereich des Gegenosmosefilters zurückgeführt, so dass auf diese Weise die Durchflussgeschwindigkeit des Saftes durch das Gegenosmosefilter erhöht und eine Ansammlung von Partikeln und der Grenzschichteffekt noch mehr verringert wird. Die Pumpe gleicht zudem den durch den Filtrationsvorgang bewirkten Druckabfall zwischen Z und A1 wieder aus. Vorteilhafterweise wird auch diese Pumpe durch eine Turbine angetrieben, welche dem Druckabbau des aus dem Gegenosmose-filter abfliessenden Konzentrats dient, so dass auch hier Energie gespart werden kann.

Dank der auf diese Weise erreichten Energierückgewinnung mittels Pumpen, die mit von zum Druckabbau eingesetzen Turbinen angetrieben werden, kann der Energiebedarf trotz hoher Permeatleistung so gering gehalten werden, dass - zumindest in der Schweiz - ein normierter Drehstromanschluss ausreichend ist.

Dank der erfindungsgemässen Ausgestaltung der Gegenosmosefilter konnte der Platzbedarf gegenüber bekannten Modulen ganz erheblich verringert werden. Beispielsweise kann eine Anlage mit einer Permeatleistung von 100 bis 300 Liter Wasser pro Stunde mit einem Kastenwagen oder einem Anhänger für einen Personenwagen transportiert werden.

Um eine Verstopfung durch grössere Partikel zu vermeiden, ist vor die mit dem Gegenosmosefilter verbundenen Mittel zur Druckerzeugung vorteilhafterweise ein Vorfilter vorgesehen, welches mit einer motorbetriebenen Pumpe verbunden ist. Auf diese Weise können gröbere Partikel ausgeschieden werden, welche zu einer Verstopfung des Gegenosmosefilters führen könnten.

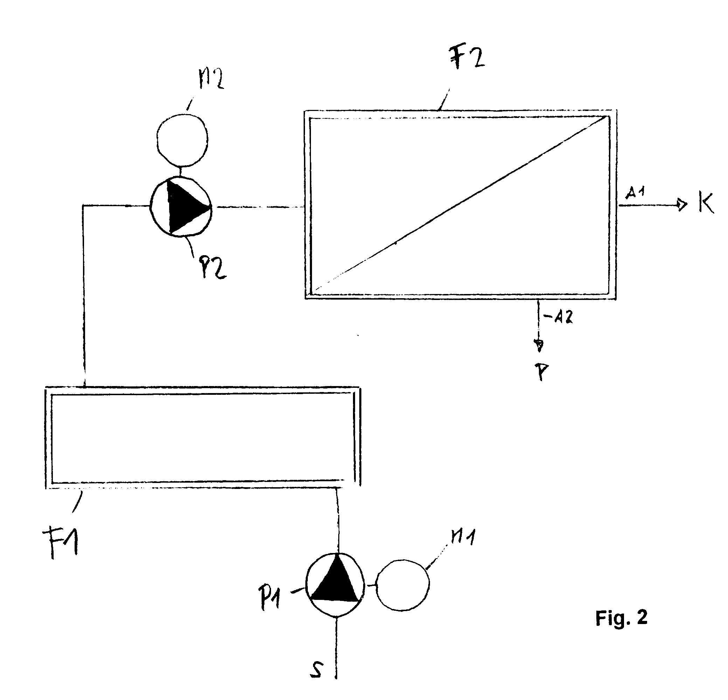

In Figur 2 ist eine einfachere Ausführungsform der erfindungsgemässen Vorrichtung gezeigt. Der Saft S wird mit einer mit einem Motor M1 angetriebenen Pumpe P1 durch ein Vorfilter F1 gepumpt und von dort von einer mit einem Motor M2 angetriebenen Pumpe P2 durch ein Gegenosmose-Filter F2 gepumpt. Das Konzentrat K kann dem Auslass Al entnommen werden. Das durch die in der Figur nicht dargestellte Gegenosmose-Membran gepresste Permeat P wird durch den Auslass A2 ausgeschieden.

Die erste Pumpe P1 erzeugt für die Grobfilterung einen Druck von ca. 3 bar. Das Vorfilter dient der Ausscheidung von grösseren Partikeln, die das Gegenosmose-Filter verstopfen könnten. Der Saft sollte keine Trübungen enthalten, die grösser als ca. 150 Mikrometer sind; deshalb kommt hierfür beispielsweise ein Polypropylenfilter mit 150 Mikrometer Porenweite in Frage. Damit die Grenzschichteffekte vermieden werden können und sich an der Gegenosmose-Membranoberfläche keine Partikel ansammeln, sollte die Abströmgeschwindigkeit des aus dem Gegenosmosefilter F2 austretendenden Konzentrats K höher als 0,1, vorzugsweise 0,25 bis 0,4 m/s, sein. Der Saft sollte mit einer Geschwindigkeit von wenigstens 0,1, vorzugsweise von etwa 0,6 bis 0,8 m/s, an den Oberflächen der in der Figur nicht dargestellten Gegenosmose-Membranen vorbeigeleitet werden. Zudem sollte die Pumpe P2 im Falle von Traubenmost einen Druck von mindestens 50 bar, vorzugsweise 80 - 120 bar, erzeugen, damit der osmotische Druck des Saftes überwunden und der Saft weiter eingedickt werden kann.

Wichtig ist die Ausgestaltung der Gegenosmosefilter. Als solche kommen in erster Linie die eingangs beschriebenen Wickelmodule in Betracht. Um den hohen Drücken standzuhalten, müssen druckfeste Materialien eingesetzt werden. So ist das in Fig. 1b gezeigte zentrale Sammelrohr 21 nicht wie bei herkömmlichen Wickelmodulen aus Kunststoff, sondern beispielsweise aus Edelstahl gefertigt. Der Abstand zwischen den Gegenosmose-Membranen sollte einerseits zwar eng sein, damit die Gegenosmosefilter möglichst kompakt sind und eine möglichst hohe Durchflussgeschwindigkeit erzielt werden kann, andererseits aber nicht so eng, dass Partikelansammlungen begünstigt werden. In der Praxis hat sich ein Abstand von 0,7 bis 3mm, vorzugsweise etwa 1-2mm, als optimal erwiesen, so dass vorteilhafterweise eine entsprechende Dicke des Spacers gewählt wird. Ferner hat es sich - wie schon erwähnt - als günstig erwiesen, Parallel-spacer zu verwenden, welche nicht zur Verstopfung durch Partikel neigen.

Eine Vorrichtung der beschriebenen Art ist geeignet, einen Zufluss von bis etwa 1200 Liter Traubensaft pro Stunde zu konzentrieren, wobei in dieser Zeit zwischen 40 und 160 (in der Regel 110) Liter Wasser extrahiert werden. Der Betriebsdruck beträgt mindestens 50 bar und bewegt sich vorzugsweise in den Grenzen zwischen 80 und 120 bar. Der Energiebedarf pro 1000 Liter Extraktion kann bei einer Anlage der genannten Grösse zwischen 24 und 110 kWh schwanken. Bei höheren Drücken wird in der Regel ein höherer Energiebedarf benötigt.

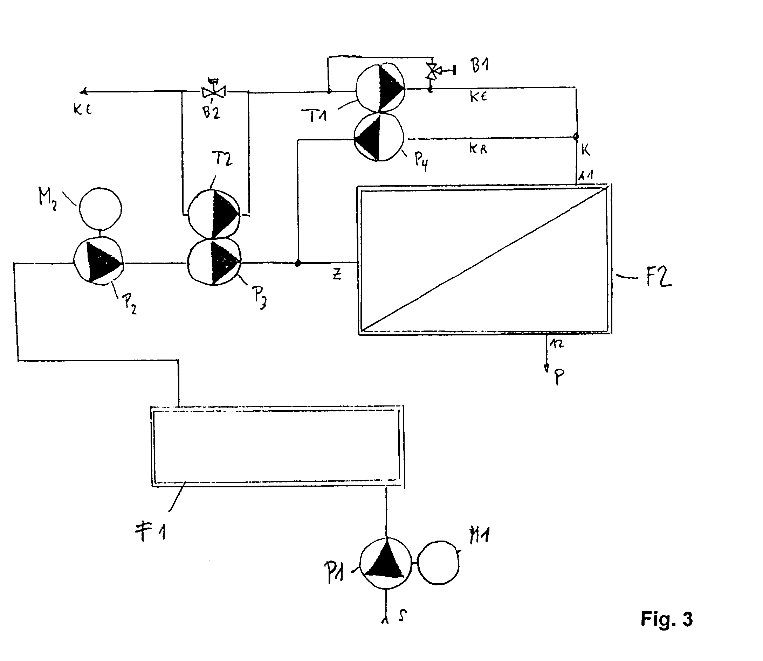

In Figur 3 ist eine weitere Ausführungsform der Erfindung dargestellt,

Der Saft S wird mit einer mit einem Motor M1 angetriebenen Pumpe P1 durch ein Vorfilter F1 gepumpt und von dort mittels zweier Pumpen P2, P3 durch ein Gegenosmose-Filter F2 gepumpt. Das durch die in der Figur nicht dargestellte Gegenosmosemembran ausgeschiedene Permeat P wird durch den Auslass A2 ausgeschieden. Das Konzentrat K wird einerseits als Endprodukt KE zu einem Teil vom Auslass Al durch zwei Turbinen T1, T2 einer in der Figur nicht dargestellten Sammelstelle zugeführt. Beide Turbinen sind mit einem regelbaren Bypass-Ventil B1, B2 zur Regelung des Arbeitsdruckes ausgerüstet. Ein anderer Teil KR des Konzentrats K wird durch eine Pumpe P4 in das Gegenosmosefilter F2 zurückgeführt.

Der für den Vorgang der Gegenosmose erforderliche hohe Druck wird bei diesem Ausführungsbeispiel mehrstufig aufgebaut. Hierzu wird das Erfordernis ausgenützt, dass der hohe Druck, der für den Filtrationsvorgang unumgänglich ist, für einen bequemen Auslass wieder abgebaut werden muss. Der Druck des aus dem Gegenosmosefilter austretenden Konzentrats K wird am Ende auf beispielsweise 0,5 bar abgebaut. Die beim Druckabbau freiwerdende Energie wird von zwei Turbinen T1, T2 aufgenommen und als Antriebsenergie an zwei Pumpen P3, P4 weitergegeben. Dies hat zweierlei Vorteile. Erstens einmal kann auf diese Weise insgesamt Energie eingespart werden. So können die beiden Antriebsmotoren M1, M2 bei einer Anlage, die zur Konzentrierung von grösseren Saftmengen, beispielsweise 3000 Liter/h, geeignet ist, trotz der hohen Permeatsleistung an einem normierten Drehstromanschluss angeschlossen werden. Zweitens wird die aufgenommene Energie statt in Wärme in Antriebsenergie umgewandelt.

Der für die Gegenosmose erforderliche Druck wird mit zwei Pumpen P2, P3 aufgebaut. Die mit dem extern gespeisten Motor M2 angetriebene Pumpe P2 baut beispielsweise einen Druck von 30 - 90, vorzugsweise 60 bar, auf. Die von der Turbine T2 angetriebene Pumpe P3 erhöht den Druck um 10 - 50, vorzugsweise 30 bar. Die Pumpe P4 pumpt einen grossen Teil des Konzentrats wieder an den Zufluss Z des Filters F2 zurück und gleicht den durch das Gegenosmose-filter verursachten Druckverlust von beispielsweise 2 bar wieder aus.

Durch die Rückführung von Konzentrat KR wird das Durchflussvolumen stark erhöht, was die erwünschte Erhöhung der Flussgeschwindigkeit zur Folge hat. So kann beispielsweise eine dreimal so grosse Menge zurückgeführt werden, als der Menge entspricht, die als Endprodukt KE abgeführt wird. In der ersten Turbine T1 kann der Druck beispielsweise um 5 - 20 bar reduziert werden. In der zweiten Turbine T2 erfolgt dann der restliche Druckabbau. Die von der jeweiligen Turbine T1, T2 erzeugte Drehenergie wird direkt der angekoppelten Pumpe P4, bzw. P3 zugeführt. Eine Regelung des Turbinen-Pumpen-Aggregats T1/P4, T2/P3 erfolgt über die regelbaren Bypassventile B1 und B2 zur Einstellung des gewünschten Arbeitsdrucks bzw. der Pumpmenge.

Eine Vorrichtung der beschriebenen Art ist geeignet, einen Zufluss von Traubensaft von etwa 3000 Liter pro Stunde zu konzentrieren, wobei zwischen 120 und 600 (in der Regel 400) Liter Wasser extrahiert werden. Der Betriebsdruck beträgt mindestens 50 bar und bewegt sich vorzugsweise in den Grenzen zwischen 80 und 120 bar. Der Energiebedarf pro 1000 Liter Extraktion kann bei einer Anlage der genannten Grösse zwischen 10 und 45 kWh schwanken und ist dank Energierückgewinnung trotz höherer Leistung deutlich geringer als beim einfacheren Modell gemäss Fig. 2. Bei höheren Drücken wird in der Regel ein höherer Energiebedarf benötigt.

Der Druckaufbau kann zum Beispiel auch durch mehr als drei Pumpen erfolgen, die entweder durch Motoren oder durch Turbinen angetrieben werden. Je nach Ausführungsform kann der Energiebedarf in grösseren als in den angegebenen Bereichen schwanken. Es natürlich selbstverständlich, dass je nach Bedarf eine Vielzahl von Wickelmodulen aneinandergereiht werden können.

## Patentansprüche

1. Vorrichtung zur Konzentration von Obst- und Gemüsesäften, dadurch gekennzeichnet, dass Mittel zur Erzeugung eines notwendigen Filtrationsdruckes über Verbindungselemente, durch welche der Saft geleitet wird, mit einem Gegenosmosefilter verbunden sind.

2. Vorrichtung nach Anspruch 1, dadurch gekennzeichnet, dass das Gegenosmosefilter wenigstens 2 Gegenosmose-Membranen enthält, welche durch einen Spacer beabstandet werden.

3. Vorrichtung nach Anspruch 2, dadurch gekennzeichnet, dass der Abstand zwischen den Gegenosmose-Membranen 0,7 bis 3, vorzugsweise 1 bis 2mm beträgt.

4. Vorrichtung nach einem der Ansprüche 2 oder 3, dadurch gekennzeichnet, dass der Spacer ein Parallelspacer ist.

5. Vorrichtung nach einem der Ansprüche 1 bis 4, dadurch gekennzeichnet, dass das Gegenosmosefilter zumindest ein Wickelmodul enthält.

6. Vorrichtung nach einem der Ansprüche 1 bis 5, dadurch gekennzeichnet, dass als Mittel zur Erzeugung des Filtrationsdruckes mindestens eine Pumpe verwendet wird.

7. Vorrichtung nach Anspruch 6, dadurch gekennzeichnet, dass zumindest eine Pumpe mit einem Motor verbunden ist.

8. Vorrichtung nach Anspruch 6 oder 7, dadurch gekennzeichnet, dass zur Erhöhung des Filtrationsdruckes eine zweite Pumpe vorgesehen ist, welche mit einer als Antriebsmittel dienenden Turbine verbunden ist.

9. Vorrichtung nach Anspruch 8, dadurch gekennzeichnet, dass die als Antriebsmittel dienende Turbine dem Druckabbau des aus dem Gegenosmosefilter ausfliessenden Konzentrat dient.

10. Vorrichtung nach einem der Ansprüche 1 bis 9, dadurch gekennzeichnet, dass eine zusätzliche Pumpe vorgesehen ist, welche vom Auslass des Gegenosmosefilters Konzentrat in den Zuflussbereich des Gegenosmosefilters fördert, und der Erhöhung der Durchflussgeschwindigkeit des Saftes durch das Gegenosmosefilters und dem Ausgleich des durch den Filtrationsvorgang bedingten Druckverlustes dient.

11. Vorrichtung nach Anspruch 10, dadurch gekennzeichnet, dass die Pumpe mit einer als Antriebsmittel dienenden Turbine verbunden ist, welche dem Druckabbau des aus dem Gegenosmosefilter ausfliessenden Konzentrat dient.

12. Vorrichtung nach einem der Ansprüche 1 bis 11, dadurch gekennzeichnet, dass vor die Mittel zur Erzeugung eines notwendigen Filtrationsdruckes, welche über Verbindungselemente mit dem Gegenosmosefilter verbunden sind, eine Pumpe und ein Vorfilter vorgeschaltet sind, welche der Elimination der grösseren Partikel dienen.

13. Verfahren zur Konzentration von Obst- und Gemüsesäften, dadurch gekennzeichnet, dass der Saft mit einem höheren als seinem osmotischen Druck durch ein nach dem Prinzip der Gegenosmose arbeitenden Filter unter Bildung von Konzentrat und Permeat geleitet wird.

14. Verfahren nach Patentanspruch 13, dadurch gekennzeichnet dass der Druck mindestens 50 bar, vorzugsweise 80-120 bar beträgt.

15. Verfahren nach einem der Ansprüche 13 oder 14, dadurch gekennzeichnet, dass die Durchflussgeschwindigkeit des Saftes durch das Gegenosmosefilter so hoch ist, dass eine Ansammlung von Schwebepartikeln an der Gegenosmose-Membranoberfläche vermieden wird.

16. Verfahren nach Anspruch 15, dadurch gekennzeichnet, dass die Durchflussgeschwindigkeit des Saftes über den Gegenosmosemembranoberflächen mindestens 0,1, vorzugsweise 0,6 bis 1 m/sec, beträgt.

17. Verfahren nach Anspruch 15, dadurch gekennzeichnet, dass Abströmgeschwindigkeit des aus dem Gegenosmosefilter austretenden Konzentrats höher als 0,1, vorzugsweise 0,25 bis 0,4 m/s, ist.

18. Verfahren nach einem der Ansprüche 13 bis 17, dadurch gekennzeichnet, dass zur Druckerhöhung im Zuflussbereich des Gegenosmosefilters Pumpmittel dienen, welche durch eine Turbine angetrieben werden, welche dem Druckabbau des ausfliessenden Konzentrats dient.

19. Verfahren nach einem der Ansprüche 13 bis 18, dadurch gekennzeichnet, dass zur Erhöhung der Durchflussgeschwindigkeit durch das Gegenosmosefilter die Durchflussmenge des Saftes erhöht wird, indem ein Teil des abfliessenden Konzentrats in den Zuflussbereich des Gegenosmosefilters zurückgeleitet wird.
